# EUROPEAN PATENT APPLICATION

(11) **EP 0 911 627 A1**
(43) Date of publication of application: **28.04.1999**
(21) Application number: 98308417.9
(22) Date of filing: 15.10.1998
(51) Int. Cl.: G01N 23/225

(54) **Analysis of chemical elements**

(30) Priority: 25.10.1997 GB 9722478
(71) Applicant: The Wahoo Trust, Guernsey, Channel Islands (GB)
(72) Inventor: Thebock, Peter, c/o The University of Natal, Durban, Kwa Zulu Natal (ZA)
(74) Representative: Downing, Michael Philip

(57) **Abstract**

A method of qualitative and quantitative elemental analysis of a sample is carried out by first energising an anode containing the or one of the elements or a compound thereof energising the pure element anode or compound anode with a pulsed e-beam and obtaining a spectrum of the produced X-ray beam, and then energising the sample to be analysed with pulsed x-ray beam, obtaining a spectrum of the produced X-ray beam and superimposing it between the zero line and the spectrum of the pure element or compound, and comparing the spectra for qualitative similarity, and, if similar, determining the relative concentration of the element or compound in the sample by direct measurement on the superimposed spectra, calibrating said data by subtracting the resolution/energy response function used as a zero line of the pure element or compound.

## Description

### FIELD OF THE INVENTION

This invention relates to the qualitative and quantitative analysis of chemical elements, compounds or mixtures thereof.

### BACKGROUND OF THE INVENTION

Energy-dispersive X-ray fluorescence analysis is known in which X-ray tubes are used as energy sources to provide spectra of irradiated material.

It is an object of the present invention to provide a method of analysis using pulsed or flashed X-rays for the analysis, which ensures greater sensitivity and optimisation of the individual response radiation of the elements or compounds being examined. Optimal wavelength or energy dispersive resolution is also aimed at as an object of the invention.

### THE INVENTION

According to the invention a method of analysing an element or compound in a sample includes the step of energising the pure element anode or compound anode with a pulsed e-beam and obtaining a spectrum of the produced X-ray beam, and then energising the sample to be analysed with pulsed x-ray beam, obtaining a spectrum of the produced X-ray beam and superimposing it between the zero line and the spectrum of the pure element or compound, and comparing the spectra for qualitative similarity, and, if similar, determining the relative concentration of the element or compound in the sample by direct measurement on the superimposed spectra, calibrating said data by subtracting the resolution/energy response function used as a zero line of the pure element or compound.

In a preferred form of the invention a series of spectra are obtained of the elements and compounds expected to be found in the sample or samples and the spectrum of the sample is then superimposed on these spectra to determine the qualitative and quantitative analysis of the sample.

The primary spectra may be obtained by means of a target having the pure elements and/or compounds arranged in zones. The energising beam is then directed to the various zones in turn and a desired spectrum obtained. Alternatively the target may consist of the elements required to be analysed or recognised. This spectrum will include identifiable peaks corresponding with the elements and compounds of the primary target according to superimposed wavelengths obtained by non-continuous flashed or pulsed excitation energies of the primary and secondary target at the same time. The sample will also be subjected to similar superimposed excitations so that its spectrum will be obtained in the same manner. A simple comparison or superimposition of primary and/or secondary target spectra with the obtained sample spectrum will give a very convenient qualitative and quantitative analysis without the necessity to use calibration software in respect of resolution calibrations. For this a pair of detectors is necessary.

The invention also extends to apparatus for carrying out the method of the invention, the apparatus including a source of excitation energy and a detector for the emitted X-rays, and means to record the emissions in spectral form.

The excitation energy means are preferably adapted to provide monochromatic wave forms for example X-rays, by the use of suitable filters and/or targets.

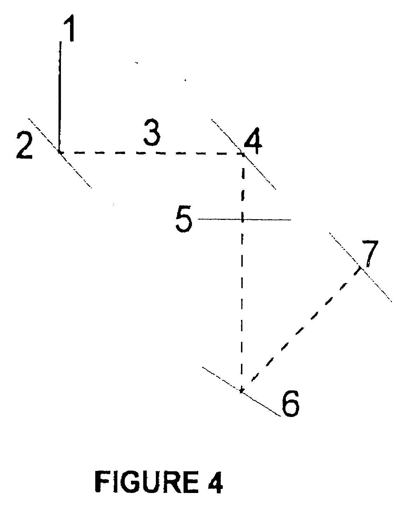

A schematic arrangement is shown in Figure 4 whose references are labelled alongside.

In Figure 4 a pulsed electron beam is directed at an angle to a primary target, in this case of tungsten. This produces X-ray radiation comprising Bremsstralung (BS) and the characteristic line spectrum of tungsten (or any other element).

The higher the energy of the electrons striking the W target, the higher is the energy of the BS, which, being white, requires reference to its integral spectrum.

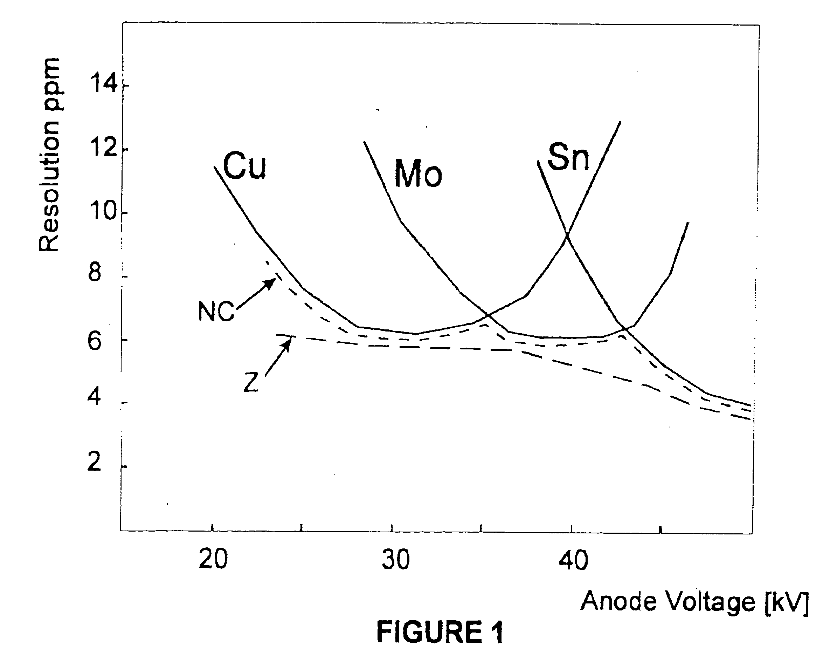

Higher X-ray excitation than the characteristic lines of elements in the X-ray spectrum excites these lines and it has been found that in addition to this there are further response characteristics as shown in Figure 1 which depend strongly on the excitation of the W target. With this in mind the present invention proposes to pulse this excitation so that every response function for the elements is entirely scanned over - thereby ensuring that maximum fluorescence of each element observed, is received by a comparator. Thus, maximum resolution (minimum ppm detectable) is achieved.

In another method a single element target may be chosen for maximum resolution of all elements up to the target element, which gives the zero NC line directly (Figure 1). This leads to a quantitative read-out. Then, by comparison with the mixed target result there is obtained an errorless comparator solution.

Using this arrangement on a target which includes minimum two metals like for example W, Os, Ir, Pt, La, Ce etc., which have consecutive monotonously increasing or decreasing X-ray corresponding maximum resolution energies relative to each other and a graph may be obtained of the energy dependence of incident electron beam on the target and from this graph a zero line marked Z can be drawn as well as an NC line (see Figure 1) which relates to Cu, Mo and Sn.

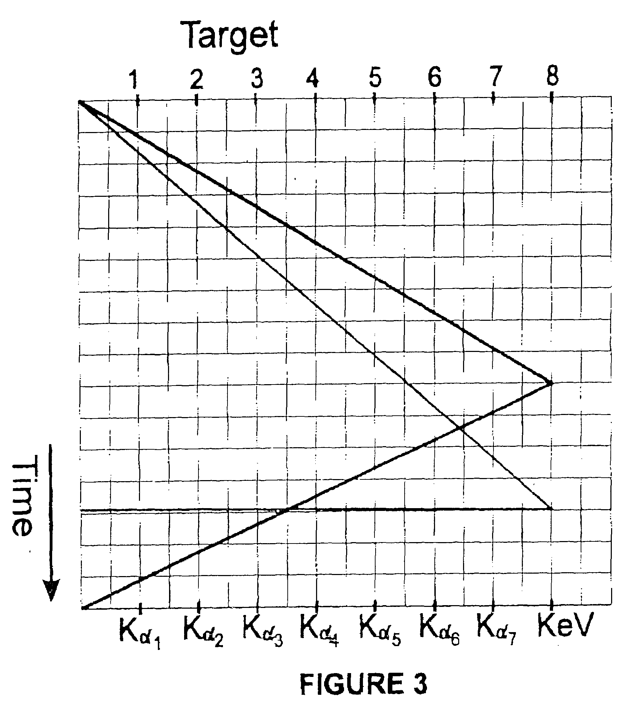

The incident electron intensity may be obtained in a manner shown in Figure 3, the top line indicating the targets, the bottom line indicating the intensities and the left hand vertical indicating time. A capacitor - bank discharge means may be used which drives a pulsed tube.

The zero line Z is preferably built into the method of sweeping across the excitation energies maximizing thereby maximizing resolution.

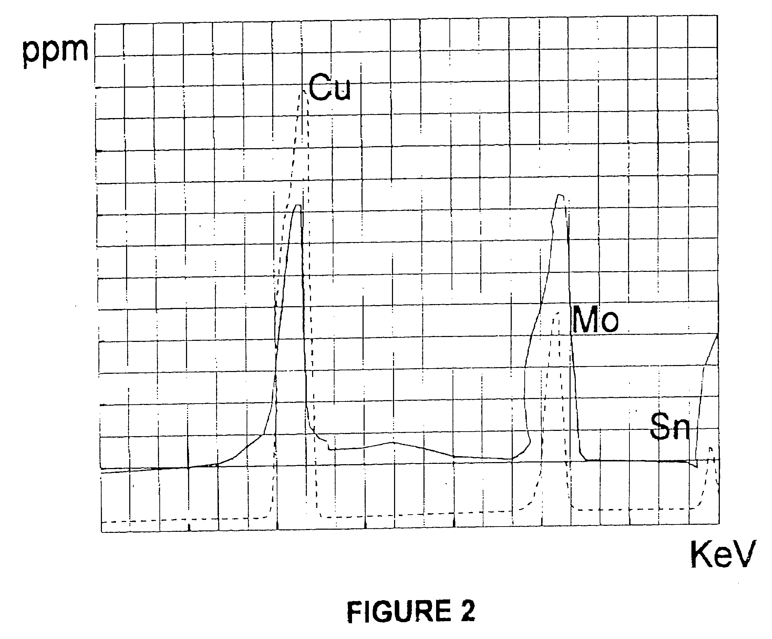

By means of computerised superimposition a graph (Figure 2) may be obtained and by optimal resolution the qualitative and quantitative detection of the three elements can be ascertained.

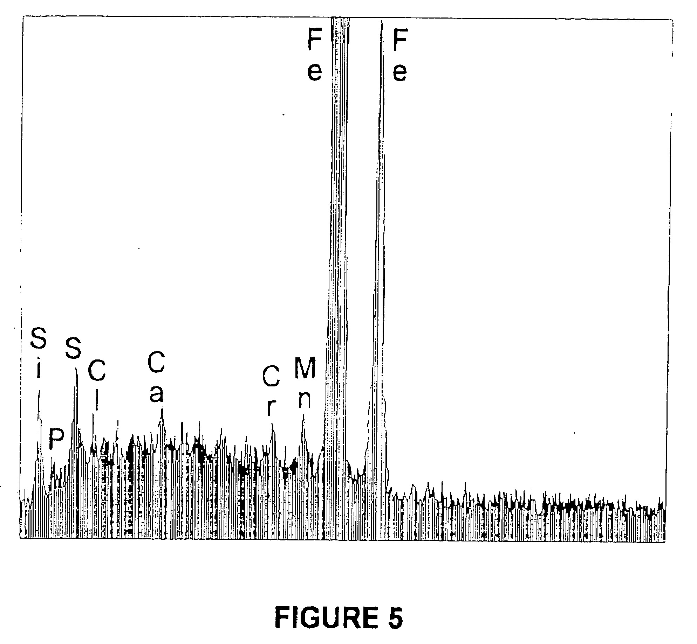

A typical graph is shown in Figure 5 with the final analysis below giving a code based on iron being the gauge element chosen to resemble 9 in the encoding process of Patent Application

## Claims

1. A method of analysing an element or compound in a sample includes the step of energising the pure element anode or compound anode with a pulsed e-beam and obtaining a spectrum of the produced X-ray beam, and then energising the sample to be analysed with pulsed x-ray beam obtaining a spectrum of the produced X-ray beam and superimposing it between the zero line and the spectrum of the pure element or compound, and comparing the spectra for qualitative similarity, and, if similar, determining the relative concentration of the element or compound in the sample by direct measurement on the superimposed spectra, calibrating said data by subtracting the resolution/energy response function used as a zero line of the pure element or compound.

2. The method according to claim 1 in which a series of spectra is obtained of the elements and compounds expected to be found in the sample or samples and the spectrum of the sample is then superimposed on these spectra to determine the qualitative and quantitative analysis of the sample.

3. The method according to claim 1 or 2 in which the primary spectra are obtained by means of a target having the pure elements and/or compounds arranged in zones.

4. The method according to claim 3 in which the energizing beam is then directed to the various zones (on the primary target) in turn and a desired spectrum obtained.

5. The method according to claim 3 in which the primary target consists of one or more of the elements required to be analyzed or recognized.

6. The method according to any of the above claims in which the spectrum includes identifiable peaks corresponding with the elements and compounds of the primary target according to superimposed wavelengths obtained by non-continuous flashed or pulsed excitation energies of the primary and secondary target at the same time and the sample is also subjected to similar superimposed excitations so that its spectrum will be obtained in the same manner, followed by a simple comparison or superimposition of primary and/or secondary target spectra with the obtained sample spectrum to give a very convenient qualitative and quantitative analysis.

7. The method according to any of the above claims in which white X-ray light derived by varying the excitation of the primary target, is pulsed to scan over the complete response functions of each element through the maxima of their resolution functions.

8. Apparatus for carrying out the method of any o the above claims including a source of excitation energy and a detector for the emitted X-rays, and means to record the emissions in spectral form.

9. The apparatus according to claim 8 in which the excitation energy means is adapted to provide monochromatic wave forms for example X-rays, by the use of suitable filters and/or targets.
